# EUROPÄISCHE PATENTSCHRIFT

(11) **EP 0 898 760 B1**
(45) Veröffentlichungstag und Bekanntmachung des Hinweises auf die Patenterteilung: **22.09.1999**
(21) Anmeldenummer: 97923061.2
(22) Anmeldetag: 12.05.1997
(51) Int. Cl.: G06K 13/08

(54) **EINRICHTUNG ZUM LESEN EINER WERTKARTE**
DEVICE FOR READING A PAYMENT CARD
DISPOSITIF POUR LIRE UNE CARTE DE PAIEMENT

(30) Priorität: 17.05.1996 CH 124596
(43) Veröffentlichungstag der Anmeldung: 03.03.1999
(73) Patentinhaber: Electrowatt Technology Innovation AG, 6301 Zug (CH)
(72) Erfinder: DOMBRE, Georges, F-74140 Saint-Cergues (FR)
(86) Internationale Anmeldenummer: EP9702423
(87) Internationale Veröffentlichungsnummer: WO9744759

(56) Entgegenhaltungen:
- WO-A-95/29459
- US-A- 5 508 501
- IBM TECHNICAL DISCLOSURE BULLETIN, Bd. 22, Nr. 8a, Januar 1980, NEW YORK, US, Seiten 3150-3151, XP002018231 HENDERSON: "Document alignment device for transport"
- IBM TECHNICAL DISCLOSURE BULLETIN, Bd. 6, Nr. 6, November 1963, NEW YORK, US, Seiten 5-6, XP002018232 BILLINGS: "Aligning device for bi-width documents"

## Beschreibung

Die Erfindung bezieht sich auf eine Einrichtung zum Lesen einer Wertkarte gemäss dem Oberbegriff des Anspruchs 1.

Solche Einrichtungen werden vorteilhaft in Dienstleistungsautomaten zur Abgeltung einer bezogenen Dienstleistung verwendet. Die bei der Abgeltung verwendete Wertkarte ist eine Kreditkarte oder eine vorbezahlte Wertkarte mit magnetisch oder optisch lesbarer Information oder auch eine sogenannte Chip-Karte. Als Beispiel seien Kredit- oder Chip-Karten der Norm ISO 7811 bzw. ISO 7816 genannt.

Es ist eine Einrichtung der im Oberbegriff des Anspruchs 1 genannten Art bekannt (WO 95/29459), welche einen Kanal zur Aufnahme einer Wertkarte aufweist, in welchem ein Mittel zur seitlichen Ablenkung derart angeordnet ist, dass ein in den Kanal eingeführter Fremdkörper durch das Einschieben einer dem Fremdkörper nachgeschobenen Wertkarte seitlich in einen Auffangraum leitbar ist. Als Fremdkörper gelten hier flache, feste Gegenstände, welche etwa die Dicke einer Wertkarte aufweisen, wie beispielsweise Münzen, Blech-, Kunststoff- oder Kartonstücke.

Bekannte Einrichtungen haben den Nachteil, dass der Kanal insbesondere dann durch Fremdkörper verstopfbar ist, wenn der Fremdkörper ein Teil einer quer zur Einschubrichtung zerbrochenen Wertkarte ist. Sofern der Fremdkörper also den Kanal der Breite nach voll ausfüllt und derart weit in den Kanal einschiebbar ist, dass er von aussen nicht mehr greifbar ist, kann der in bekannter Art ausgeführte Kanal beispielsweise dann verstopft werden, wenn der Fremdkörper mindestens eine gewisse Länge aufweist und durch eine nachgeschobene Wertkarte auf einen am Kanal angeordneten Anschlag trifft. Ein auf diese Art verstopfter Kanal kann oft nur durch einen Service-Eingriff wieder entfernt werden, wodurch die Einrichtung - zum Nachteil von Betreibern und Benutzern - unter Umständen längere Zeit ausser Betrieb ist.

Der Erfindung liegt die Aufgabe zugrunde, eine Einrichtung zum Lesen einer Wertkarte anzugeben, die gegenüber einem anstelle der Wertkarte eingegebenen flachen Fremdkörper tolerant ist, so dass der Fremdkörper die Einrichtung nicht durch Verstopfen ausser Betrieb setzt, insbesondere auch dann, wenn der Fremdkörper in seiner Breite einer Stirnseite der Wertkarte entspricht, also beispielsweise ein Teil einer zerbrochenen Wertkarte ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Schnittdarstellung eines Ausschnittes einer Einrichtung zum Lesen einer Wertkarte mit der Wertkarte in der Draufsicht,
- Fig. 2: eine weitere - in Fig. 1 als Schnitt S-S markierte - Schnittdarstellung des Ausschnittes der Einrichtung,
- Fig. 3: der geschnittene Ausschnitt der Einrichtung gemäss der Fig. 1, jedoch mit einem eingeschobenen Fremdkörper in der Draufsicht,
- Fig. 4: der geschnittene Ausschnitt der Einrichtung mit dem eingeschobenen Fremdkörper gemäss der Fig. 3, wobei der Fremdkörper durch eine nachfolgend eingeschobene Wertkarte jedoch tiefer eingeschoben ist,
- Fig. 5: eine vorteilhafte Ausführungsvariante eines seitlichen Führungsmittels für die Wertkarte.

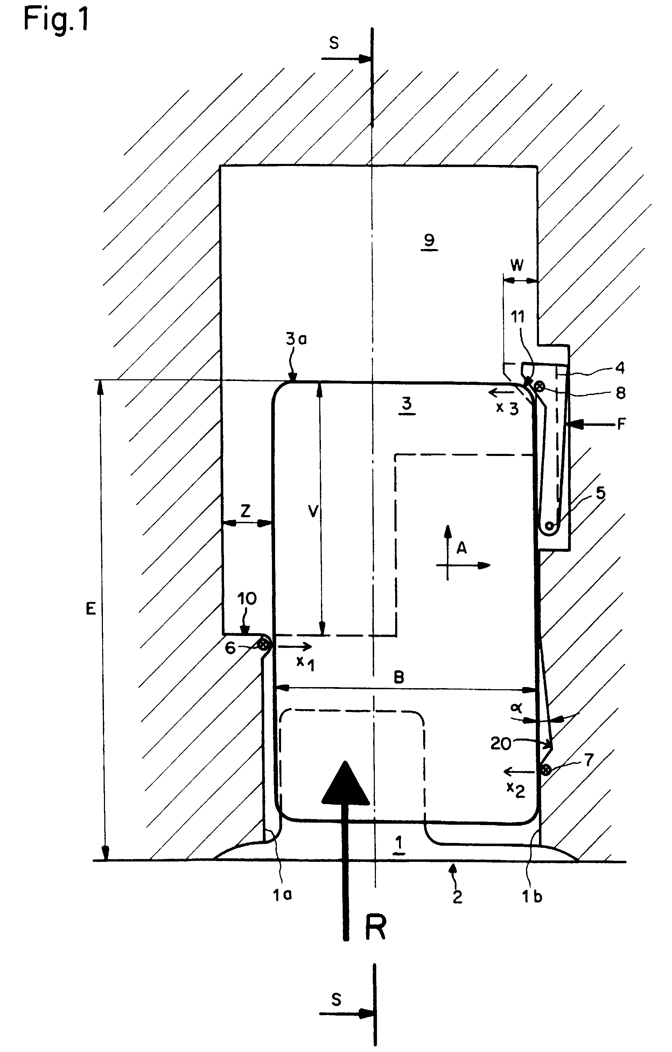

In der Fig. 1 ist mit 1 ein ein erstes seitliches Führungsmittel 1a und ein zweites seitliches Führungsmittel 1b aufweisender Kanal bezeichnet, der über eine Öffnung 2 verfügt, durch die eine Wertkarte 3 in einer Einschubrichtung R in den Kanal 1 einschiebbar ist, wobei die Wertkarte 3 durch die am Kanal 1 einander gegenüberliegenden Führungsmittel 1a und 1b geführt ist. Auf einer Seite des Kanals 1 ist ein Hebel 4 angeordnet, der in einer vorteilhaften Ausführung der Einrichtung zum Lesen der Wertkarte 3 in einer Ebene um eine Drehachse 5 drehbar ist. Die Wertkarte 3 ist im Kanal 1 in einer Endlage dargestellt, welche im wesentlichen durch ein erstes Auflager 6, ein zweites Auflager 7 und ein drittes Auflager 8 bestimmt ist, wobei die Wertkarte 3 im Kanal 1 eine Eindringtiefe E aufweist, welche im wesentlichen durch die Position des dritten Auflagers 8 bestimmt ist. Die Wertkarte verfügt über eine Breite B, auf deren Mass auch die Kanalbreite abgestimmt ist.

Das erste Auflager 6 ist ein Auflagepunkt der Wertkarte 3 auf das erste seitliche Führungsmittel 1a, während das zweite Auflager 7 ein Auflagepunkt der Wertkarte 3 auf das zweite seitliche Führungsmittel 1b ist. Das dritte Auflager 8 ist ein Auflagepunkt der Wertkarte an den Hebel 4.

Die Werkarte 3 weist einen senkrecht zu einer Auflageebene A der Wertkarte 3 liegenden Rand 3a auf, dessen Breite durch die Materialdicke der Wertkarte 3 gegeben ist. Der Rand 3a weist damit bei rechteckiger Form der Wertkarte im wesentlichen zwei parallel zueinander liegende kurze Seitenflächen und zwei parallel zueinander liegende lange Seitenflächen auf. In der Einrichtung nach der Fig. 1 wird die Wertkarte 3 mit einer kurzen Seitenfläche voran durch die Öffnung 2 in den Kanal 1 eingeschoben. Dadurch sind das zweite Auflager 7 und das dritte Auflager 8 mit einem derart grossen Abstand voneinander plazierbar, dass die Wertkarte 3 im Kanal 1 mit der erforderlichen Genauigkeit ausgerichtet wird.

Dadurch, dass die Wertkarte 3 mit einer kurzen Randfläche voran in den Kanal 1 einschiebbar ist, sind beispielsweise bei einer Chipkarte der Norm ISO 7816 erforderliche Sicherheitsabstände erreichbar, welche während eines Speicherzugriffes auf die Wertkarte 3 für den Chip gegenüber der Öffnung 2 oder gegenüber einem allfällig greifbaren Teil der Wertkarte 3 einzuhalten sind.

In einer nicht gezeichneten Variante der Einrichtung ist der Kanal 1 so ausgelegt, dass die Wertkarte 3 mit einer langen Seitenfläche voran in den Kanal 1 einschiebbar ist.

Eine Seitenfläche des Randes 3a, welche beim Einschieben der Wertkarte 3 als erstes in die Öffnung 2 eingeführt wird, ist in diesem Text auch als Stirnfläche der Wertkarte 3 bezeichnet.

An dem der Öffnung 2 gegenüberliegenden Ende des Kanals 1 ist ein Auffangraum 9 angeordnet, so dass also der Kanal 1 von der Öffnung 2 in den Auffangraum 9 führt.

Auf der dem Hebel 4 gegenüberliegenden Seite des Kanals 1, beim ersten Auflager 6, ist eine Übergangsstelle 10 des Kanals 1 in den Auffangraum 9 als Stufe ausgebildet, wodurch sich die Breite B des Kanals um ein erstes Mass Z vergrössert. Die Übergangsstelle 10 ist bezogen auf das dritte Auflager 8 mit Vorteil um ein zweites Mass V gegen die Öffnung 2 hin zurückversetzt.

Der Hebel 4 ist um die Drehachse 5 zwischen einer ersten mit gestrichelter Linie dargestellten Endlage und einer zweiten mit durchgezogener Linie dargestellten Endlage drehbar, wobei die beiden Endlagen durch Begrenzungsmittel bestimmt sind.

Am Hebel 4 ist im Bereich des dritten Auflagers 8 gegen die Wertkarte hin eine Ablenkfläche 11 ausgebildet.

Die erste, gestrichelt gezeichnete Endlage des Hebels 4 ist die Ruhelage, welche der Hebel 4 einnimmt, wenn sich keine Wertkarte 3 im Kanal 1 befindet. Der Hebel 4 ist derart mit einer Kraft F beaufschlagt, dass er ohne eine Gegenkraft in der ersten Endlage gehalten wird. Eine Gegenkraft auf den Hebel 4 ergibt sich durch die in den Bereich der Eindringtiefe E eingeschobene Wertkarte 3. Durch die Gegenkraft ist der Hebel 4 bis in die zweite Endlage schwenkbar. Mit W ist ein drittes Mass bezeichnet, um welches der Hebel 4 in der ersten Endlage seitlich in den Kanal 1 eindringt.

Die Kraft F ist vorteilhaft die Federkraft einer in der Zeichnung nicht dargestellten Feder.

Dadurch, dass der Hebel 4 um die Drehachse 5 drehbar ausgeführt ist, kann durch eine beim Einschieben der Wertkarte 3 ausgeführte Drehbewegung des Hebels 4 auch ein Signal in einen Zustand gesetzt werden, der auf die eingeschobene Wertkarte 3 hinweist. So ist beispielsweise ein hier nicht dargestellter Mikroschalter zur Erzeugung des Signals durch den Hebel 4 betätigbar.

Zwischen dem zweiten Auflager 7 und dem dritten Auflager 8, vorteilhafterweise unmittelbar beim zweiten Auflager 8, ist der Kanal 1 durch eine Ausbuchtung 20 erweitert.

Die genaue Position der bis zur Eindringtiefe E eingeschobenen Wertkarte 3 ist grundsätzlich durch die drei am Rand 3a der Wertkarte 3 anliegenden Auflager 6, 7 und 8 bestimmt, wobei das erste Auflager 6 eine auf die Wertkarte 3 wirksame Kraftkomponenten x₁ aufweist, die rechtwinklig zur Einschubrichtung R gegen die Wertkarte 3 hin verläuft, und wobei das zweite Auflager 7 und das dritte Auflager 8 auf die Wertkarte 3 wirksame Kraftkomponenten x₂ bzw. x₃ aufweisen, welche parallel versetzt, jedoch in entgegengesetzter Richtung zur besagten Kraftkomponente x₁ des ersten Auflagers 6 verlaufen. In einer stabilen Endlage der Wertkarte 3 verläuft die Kraftkomponente x₁ des ersten Auflagers 6 auf einer zwischen den beiden Wirklinien der beiden Kraftkomponenten x₂ bzw. x₃ des zweiten Auflagers 7 und des dritten Auflagers 8 liegenden Wirklinie. Die Eindringtiefe E wird grundsätzlich durch eine entgegengesetzt zur Einschubrichtung R wirkende Kraftkomponente des als Anschlag wirkenden dritten Auflagers 8 begrenzt.

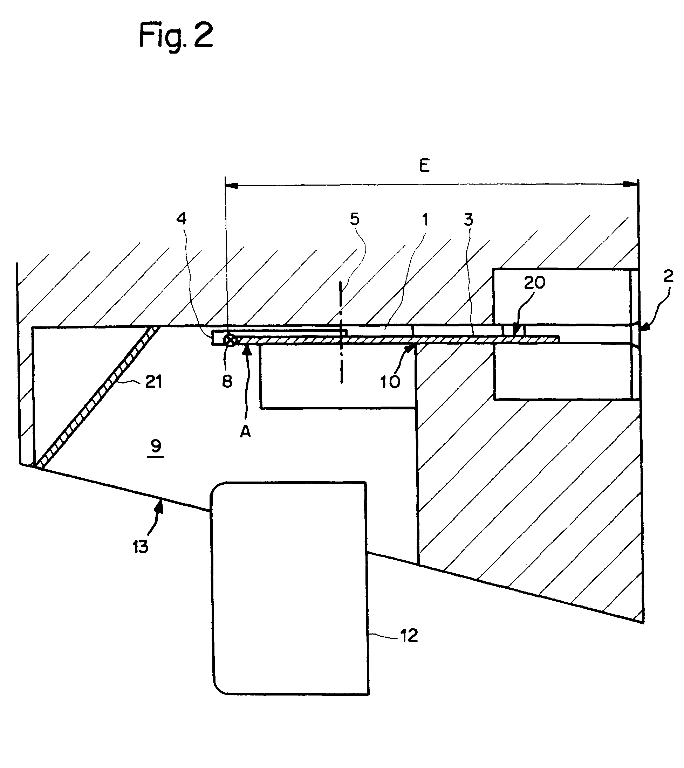

In der Fig. 2 ist eine vorteilhafte Anordnung des Auffangraumes 9 ersichtlich, in welcher der Auffangraum 9 im wesentlichen unterhalb der senkrecht zum Rand 3a liegenden Auflageebene A der Wertkarte 3 ausgebildet ist, so dass durch das Eigengewicht eines in den Kanal eingeschobenen Fremkörpers 12 eine Bewegung des Fremkörpers 12 in den Auffangraum 9 unterstützbar ist. In einer vorteilhaften Ausführung der Übergangsstelle 10 geht der Kanal 1 in einem wesentlichen Bereich seiner Breite auf der dem Hebel 4 gegenüberliegenden Seite des Kanals 1 in den Auffangraum 9 über, wodurch der Kanal 1 in einem wesentlichen Teil seiner Breite von der Übergangsstelle 10 an vertieft ist, so dass die Auflagefläche der Wertkarte 3 im Kanal 1 von der Übergangsstelle 10 an mehrheitlich auf der Seite gegen den Hebel 4 hin angeordnet ist.

Bei Bedarf ist der Auffangraum 9 seitlich und/oder nach unten mindestens teilweise offen ausgebildet, womit der Auffangraum 9 seitlich und/oder unten durch die Einrichtung nicht begrenzt ist, so dass ein in den Kanal 1 eingeführter Fremdkörper 12 in der Einrichtung nicht zurückgehalten wird.

Dadurch, dass der in den Kanal 1 eingeführte Fremdkörper 12 in der Einrichtung nicht zurückgehalten wird, ergeben sich im wesentlichen zwei Vorteile: Für einen Betreiber der Einrichtung ergibt sich der Vorteil, dass kein Service-Eingriff zum Entleeren des Auffangraumes 9 notwendig ist, während der Benutzer der Einrichtung den Vorteil erfährt, dass ein durch eine Fehlbedienung eingegebener Fremdkörper 12, beispielsweise eine Münze, selbsttätig zurückgegeben wird.

In der in der Fig. 2 dargestellten Ausführungsbeispiel der Einrichtung weist der Auffangraum 9 nach unten einen Auslass 13 auf. Der Auffangraum 9 ist damit nach unten mindestens teilweise offen ausgebildet. Der in den Auffangraum 9 abgelenkte Fremdkörper 12 fällt durch den Auslass 13 aus der Einrichtung.

In einem weiteren nicht gezeichneten Ausführungsbeispiel der Einrichtung verfügt diese über eine Rückgaberutsche, welche den Auffangraum 9 nach unten abschliesst. Im Auffangraum 9 mündet die Rückgaberutsche in einen seitlichen Ausgang des Auffangraumes 9. Der in den Auffangraum 9 abgelenkte Fremdkörper 12 gleitet selbsttätig über die Rückgaberutsche durch den Ausgang aus der Einrichtung.

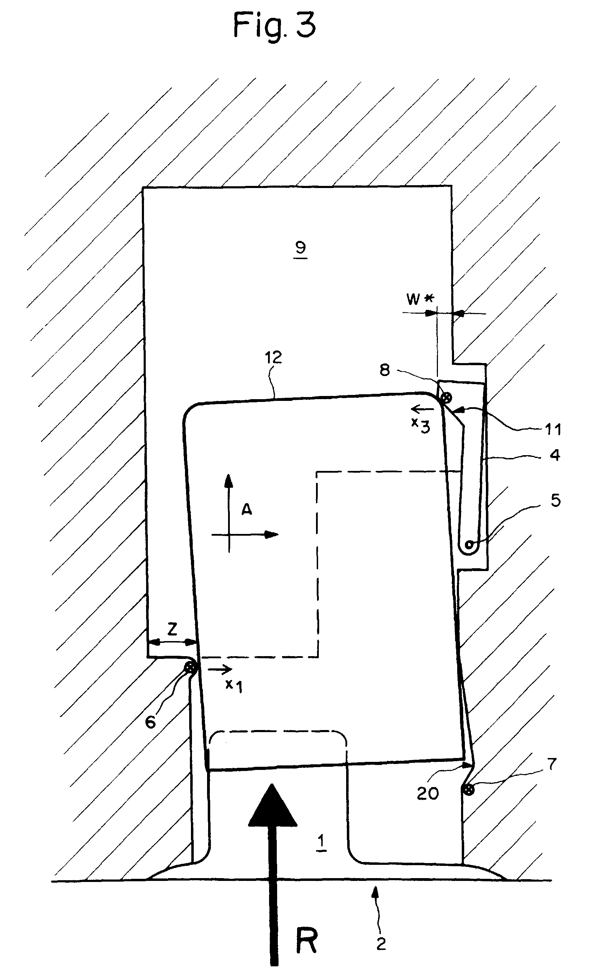

In der Fig. 3 ist der Hebel 4 in der zweiten Endlage dargestellt, wobei er seitlich um ein viertes Mass W* in den Kanal 1 eindringt. Der in den Kanal 1 eingeführte Fremdkörper 12 berührt den Hebel 4 an der das dritte Auflager 8 bildenden Ablenkfläche 11. Der Fremdkörper 12 ist derart weit in den Kanal 1 eingeschoben, dass der Rand des Fremkörpers 12 am zweiten Auflager 7 nicht mehr aufliegt. Durch die beiden versetzt gegeneinander wirkenden Kraftkomponenten x₁ und x₃ des ersten Auflagers 6 und des dritten Auflagers 8 ist der Fremdkörper 12 in der Auflageebene A im Gegenuhrzeigersinn drehbar, da der Fremdkörper 12 teilweise in die Ausbuchtung 20 verschiebbar ist.

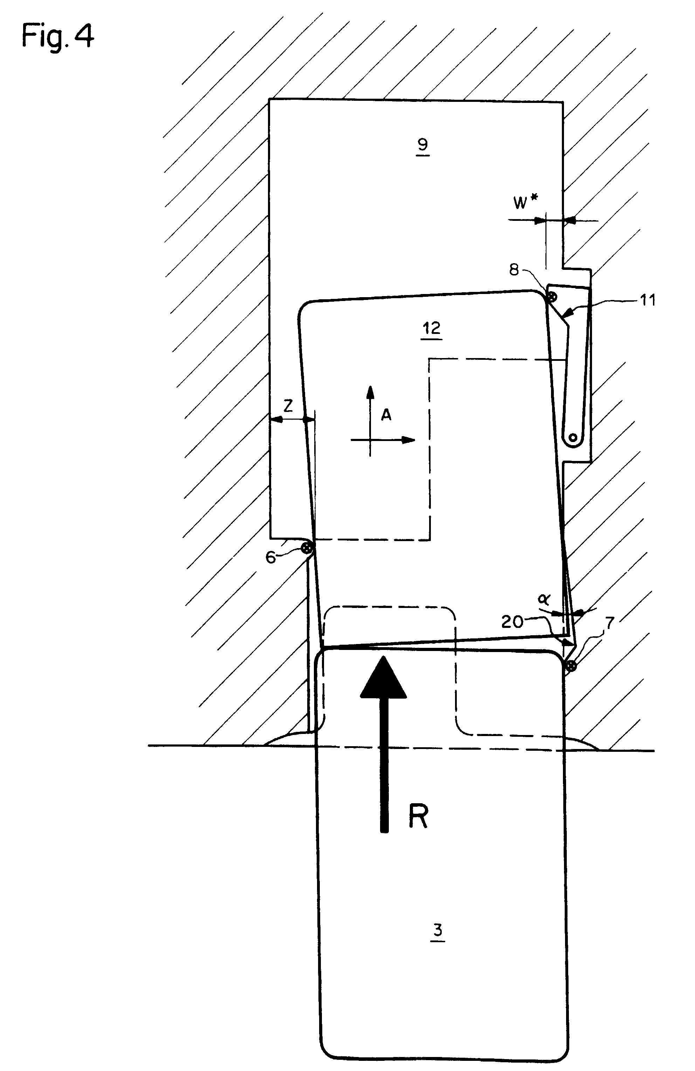

Der in der Auflageebene A infolge der vorteilhaften Ausbuchtung 20 gedrehte Fremdkörper 12 ist durch eine ihm nachgeschobene Wertkarte 3 (Fig. 4) durch den Kanal 1 in den Auffangraum 9 transportierbar, wobei der Fremdkörper 12 durch die Ablenkfläche 11 am dritten Auflager 8 vorbei bewegbar ist, da der Kanal 1 auf der Länge des bis zum dritten Auflager 8 eingeschobenen Fremdkörpers 12, und weiter in der Einschubrichtung R in den Auffangraum 9 um das erste Mass Z verbreitert ist.

Durch eine funktionsgerechte Ausbildung der Ablenkfläche 11 - insbesondere durch die Wahl des Verlaufes oder der Neigung der Ablenkfläche 11 gegenüber der Einschubrichtung R, in welcher der Fremdkörper 12 bzw. die Wertkarte 3 einschiebbar ist - wird ein Blockieren des Fremdkörpers 12 am dritten Auflager 8 verhindert.

Mit Vorteil ist der Auffangraum 9 durch ein weiteres Ablenkmittel 21 (Fig. 2) abgeschlossen, durch welches ein an der Ablenkfläche 11 vorbei bewegter Fremdkörper 2 mit Sicherheit von der Auflageebene A aus nach unten in den Auffangraum 9 gelenkt wird. In einer vorteilhaften Ausführung des Auffangraumes 9 ist das weitere Ablenkmittel 21 durch eine auf die Einschubrichtung R bezogen von oben nach unten verlaufende Abschrägung, welche hinter dem im Kanal 1 als hinterer Anschlag wirkenden dritten Auflager 8 angeordnet ist.

Aus der Fig. 3 und der Fig. 4 ist klar ersichtlich, dass, wenn der Fremdkörper 12 die Breite B der Wertkarte aufweist - also wenn der Fremdkörper beispielsweise ein Teil einer Wertkarte ist - der Kanal 1 von der Übergangsstelle 10 an gegen den Auffangraum 9 hin mindestens um das vierte Mass W* breiter ausgebildet sein muss, damit der Fremdkörper 12 an der Ablenkfläche 11 und am dritten Auflager 8 vorbei transportierbar ist; mit Vorteil gilt also Z ≥ W*.

Es versteht sich von selbst, dass das erste Mass Z jedoch mindestens so gross wie das dritte Mass W sein muss, damit der Fremdkörper 12 am Hebel 4 vorbeischiebbar ist, ohne dass dabei der Hebel 4 ausgelenkt wird.

Mit Vorteil ist die Übergangsstelle 10 von der Position des im Wirkbereich der Ablenkfläche 11 liegenden dritten Auflagers 8 aus gegen die Öffnung 2 hin um das zweite Mass V (Fig. 1) zurückversetzt. Je grösser das zweite Mass V gewählt wird, desto längere Fremdkörper 12 der Breite B sind in den Auffangraum 9 lenkbar. Mit Vorteil ist das zweite Mass V grösser als die halbe Länge der Wertkarte 3.

Dadurch, dass die Auflagefläche des Fremdkörpers 12 im Kanal 1 von der Übergangsstelle 10 an auf der Seite mit dem Hebel 4 ist, der Kanal 1 also auf der dem Hebel 4 gegenüber liegenden Seite in den Auffangraum 9 hin vertieft ist, wird die Wirksamkeit des Auffangraumes 9 zur Aufnahme von Fremdkörpern 12 noch verbessert.

Die beschriebene Einrichtung wird durch den anstelle der Wertkarte 3 eingegebenen flachen Fremdkörper 12 nicht verstopft, da die Einrichtung den Auffangraum 9, in welchen der Kanal 1 in der Aufnahmerichtung R der Wertkarte 3 geführt ist und weiter einen am Kanal 1 angeordneten Anschlag für die Wertkarte 3 aufweist, durch den die Eindringtiefe E der Wertkarte 3 in der Aufnahmerichtung R in den Kanal 1 derart begrenzbar ist, dass die Wertkarte 3 nicht in den Auffangraum 9 transportierbar ist.

Die Toleranz der Einrichtung gegenüber dem Fremdkörper 12 wird durch die als seitliches Ablenkmittel wirksame Ablenkfläche 11 und weiter durch das vertikal wirksame Ablenkmittel 21 erhöht, durch welche der Fremdkörper 12 am genannten Anschlag vorbei in den Auffangraum 9 gelenkt wird. Die Ablenkmittel verhindert auf vorteilhafte Art, dass der Fremdkörper 12 durch den durch das dritte Auflager 8 verwirklichte Anschlag oder durch eine Begrenzung des Auffangraumes 9 blockiert wird.

In einer besonders vorteilhaften Ausführung der Einrichtung sind der Anschlag und das Ablenkmittel im Hebel 4 kombiniert, wobei das seitlich wirksame Ablenkmittel die Ablenkfläche 11 und der Anschlag das dritte Auflager 8 ist.

Dadurch dass das zweite seitliche Führungsmittel 1b die Ausbuchtung 20 aufweist, wird die Toleranz der Einrichtung gegenüber der Gestalt des Fremdkörpers 12 wesentlich erhöht, da der Fremdkörper 12 im Kanal 1 in der Auflageebene A um einen bestimmten Winkel a drehbar ist, der in vorteilhafter Art durch die Form der Ausbuchtung 20 in gewissen Grenzen wählbar ist. Durch die Anordnung der Ausbuchtung 20 und der drei Auflager 6, 7 und 8 ist das Verhalten der Einrichtung gegenüber Fremdkörpern entsprechend den Bedürfnissen einstellbar, das heisst durch die Ausgestaltung der Ausbuchtung 20 und die Anordnung der drei Auflager 6, 7 und 8 ist die Einrichtung bezüglich ihrer Toleranz gegenüber Fremdkörpern so optimierbar, wobei zudem eine gut reproduzierbare Positionierung der bis zur Eindringtiefe E eingeschobenen Wertkarte 3 erreichbar ist.

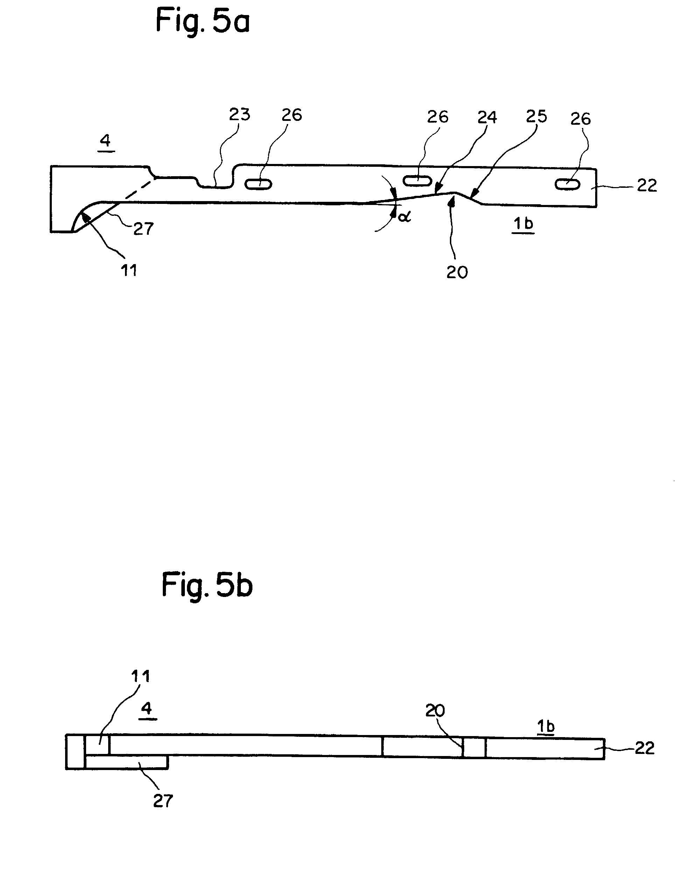

Eine in der Fig. 5a als Grundriss und in der Fig. 5b als Aufriss dargestellte Führungsschiene 22 ist eine vorteilhafte Ausführungsform einer Kombination des zweiten Führungsmittels 1b, der Ausbuchtung 20 und des die Ablenkfläche 11 aufweisenden Hebels 4. Die Führungsschiene 22 ist vorteilhafterweise aus elastischem Kunststoff und weist eine die Drehachse 5 (Fig. 1) des Hebels 4 funktional ersetzende Biegezone 23 auf, an welcher die Führungsschiene 22 wesentlich schmäler ausgestaltet ist. Die Ausbuchtung 20 ist so gestaltet, dass der in den Kanal 1 (Fig. 3) eingeführte Fremdkörper 12 in der Auflageebene A um den Winkel a drehbar ist. Mit Vorteil ist die Ausbuchtung 20 prinzipiell sägezahnförmig ausgeführt, wobei eine flachere der Biegezohne 23 näher liegende Flanke 24 grundsätzlich den Winkel α bestimmt. Eine im eingebauten Zustand der Führungsschiene 22 die Ausbuchtung 20 gegen die Öffnung 2 (Fig.3) hin abschliessende zweite Flanke 25 ist mit Vorteil steiler angelegte, damit der Fremdkörper 12 beim Einschieben auf relativ kurzem Weg die Drehung um den Winkel α ausführt.

Mit Vorteil weist die Führungsschiene 22 mehrere Befestigungspunkte 26 auf, durch welche die Führungsschiene 22, mit Ausnahme des die Biegezone 23 und den Hebel 4 aufweisenden Bereiches, im eingebauten Zustand genügend Biegefestigkeit aufweist.

Vorteilhafterweise ist an der Führungsschiene im Bereich der Ablenkfläche 11 ein Auflageelement 27 ausgebildet, durch welches die bis zur Eindringtiefe E eingeschobene Wertkarte 3 auch vertikal gut abstützbar ist.

Dadurch dass der Kanal 1, angrenzend an einen seitlichen Rand der eingeschobenen Wertkarte 3, zwischen dem zweiten Auflager 7 und dem dritten Auflager 8 eine Ausbuchtung 20 aufweist, ist die Einrichtung zum Lesen einer Wertkarte gegenüber einem anstelle der Wertkarte 3 eingegebenen flachen Fremdkörper 12 tolerant, insbesondere auch dann, wenn der Fremdkörper 12 in seiner Breite einer Stirnseite der Wertkarte 3 entspricht, also beispielsweise ein Teil einer zerbrochenen Wertkarte ist. In vorteilhafter Art ist der Fremdkörper 12, wenn dessen der Rand am zweiten Auflager 7 nicht mehr aufliegt, durch die versetzt gegeneinander wirkenden Kraftkomponenten x₁; x₃ des ersten Auflagers 6 und des dritten Auflagers 8 in der Auflageebene A drehbar, wobei der Fremdkörper 12 teilweise in die Ausbuchtung 20 verschiebbar ist.

Dadurch, dass mindestens die Ausbuchtung 20 und das dritte Auflager 8 durch ein einziges Bauelement aus Kunststoff verwirklichbar sind, kann die Einrichtung mit hoher Funktionssicherheit gefertigt werden, wobei auch eine hohe Genauigkeit bei der Positionierung der Wertkarte 3 in der Einrichtung erreichbar ist, da insgesamt nur wenige mechanische Bauelemente genau zu plazieren sind.

## Patentansprüche

1. Einrichtung zum Lesen einer Wertkarte (3),
mit einem Kanal (1) in den die Wertkarte (3) einschiebbar ist und
mit einem am Kanal angeordneten Auffangraum (9) für Fremdkörper (12),
wobei die Wertkarte (3) im Kanal (1) beim Einschieben in einer Auflageebene (A) durch am Rand (3a) der Wertkarte (3) anliegende Auflager (6; 7; 8) positionierbar ist,
wobei ein erstes Auflager (6) bei eingeschobener Wertkarte (3) eine auf die Wertkarte (3) wirksame Kraftkomponente (x₁) aufweist, die rechtwinklig zur Einschubrichtung (R) gegen die Wertkarte (3) hin verläuft, und
wobei ein zweites Auflager (7) und ein drittes Auflager (8) bei eingeschobener Wertkarte (3) auf die Wertkarte (3) wirksame Kraftkomponenten (x₂; x₃) aufweisen, welche parallel versetzt, jedoch in entgegengesetzter Richtung zur besagten Kraftkomponente (x₁) des ersten Auflagers (6) verlaufen,
**dadurch gekennzeichnet,**
dass der Kanal (1), angrenzend an einen seitlichen Rand der eingeschobenen Wertkarte (3), zwischen dem zweiten Auflager (7) und dem dritten Auflager (8) eine Ausbuchtung (20) aufweist,
dass die Ausbuchtung (20) derart ausgebildet ist, dass ein anstelle der Wertkarte (3) in den Kanal (1) eingeschobener Fremdkörper (12), welcher derart weit in den Kanal (1) einschiebbar ist, dass der Rand des Fremdkörpers (12) am zweiten Auflager (7) nicht mehr aufliegt, durch die besagten versetzt gegeneinander wirkenden Kraftkomponenten (x₁; x₃) des ersten Auflagers (6) und des dritten Auflagers (8) in der Auflageebene (A) drehbar ist, wobei der Fremdkörper (12) teilweise in die Ausbuchtung (20) verschiebbar ist.

2. Einrichtung nach Anspruch 1 **gekennzeichnet durch**
einen am Kanal (1) angeordneten Anschlag (8) für die Wertkarte (3), durch den die Eindringtiefe (E) der Wertkarte (3) in der Einschubrichtung (R) in den Kanal (1) derart begrenzbar ist, dass die Wertkarte (3) nicht in den Auffangraum (9) transportierbar ist.

3. Einrichtung nach einem der vorangehenden Ansprüche, **dadurch gekennzeichnet,**
dass der Auffangraum (9) so ausgebildet und am Kanal (1) angeordnet ist, dass ein durch die Öffnung (2) in den Kanal (1) eingeführter Fremdkörper (12), der nicht selbsttätig in den Auffangraum (9) fällt, durch die dem Fremdkörper (12) im Kanal (1) nachgeschobene Wertkarte (3) in den Auffangraum (9) transportierbar ist.

4. Einrichtung nach einem der vorangehenden Ansprüche, **gekennzeichnet durch**
ein Ablenkmittel (11), durch welches der Fremdkörper (12) aus dem Kanal (1) in den Auffangraum (9) lenkbar ist.

5. Einrichtung nach Anspruch 2, **dadurch gekennzeichnet,**
dass der Anschlag zusammen mit dem ersten Auflager (8) als ein in einem gewissen Bereich in einer Ebene drehbarer Hebel (4) verwirklicht ist, der beim Aufnehmen der Wertkarte (3) entgegen einer Kraft (F) durch die Wertkarte (3) seitlich von der Wertkarte (3) weg aus einer Ruhelage so weit auslenkbar ist, dass die Wertkarte (3) zum Lesen positioniert ist, wenn der Hebel (4) maximal ausgelenkt ist, und dass das Ablenkmittel (11) durch eine am Hebel (4) ausgebildete Ablenkfläche (11) verwirklicht ist.

6. Einrichtung nach einem der vorangehenden Ansprüche, **gekennzeichnet durch**
eine Übergangsstelle (10) des Kanals (1) in den Auffangraum (9), ab welcher die Breite (B) des Kanals (1) in der Einschubrichtung (R) gegen den Auffangraum (9) hin vergrössert ist.

7. Einrichtung nach Anspruch 6, **dadurch gekennzeichnet,**
dass die Übergangsstelle (10) vom Wirkbereich (8) des Ablenkmittels (11) gegen die Öffnung (2) hin zurückversetzt ist.

8. Einrichtung nach einem der Ansprüche 2 bis 7, **gekennzeichnet durch**
ein bezogen auf die Einschubrichtung (R) im Kanal (1) nach dem Anschlag (8) angeordnetes weiteres Ablenkmittel (21), durch welches der eingeschobene Fremdkörper (12) vertikal nach unten in den Auffangraum (9) lenkbar ist.

9. Einrichtung nach einem der vorangehenden Ansprüche, **dadurch gekennzeichnet,**
dass der Auffangraum (9) seitlich und/oder nach unten mindestens teilweise offen ausgebildet und damit seitlich und/oder nach unten durch die Einrichtung nicht vollständig begrenzt ist, so dass der in den Kanal (1) eingeführte Fremdkörper (12) in der Einrichtung nicht zurückgehalten wird.

10. Einrichtung nach einem der vorangehenden Ansprüche, **dadurch gekennzeichnet,**
dass die Ausbuchtung (20) und das dritte Auflager (8) durch ein einziges Bauelement aus Kunststoff verwirklicht sind.

## Claims

1. Apparatus for reading a value card (3), comprising
a passage (1) into which the value card (3) can be inserted, and
a catch space (9) for foreign bodies (12), the catch space being arranged at the passage,
wherein the value card (3) can be positioned in the passage (1) upon being inserted therein in a support plane (A) by supports (6; 7; 8) which bear against the edge (3a) of the value card (3),
wherein when the value card (3) is inserted a first support (6) has a force component (x₁) which is operative on the value card (3) and which extends at a right angle to the insertion direction (R) towards the value card (3), and
when the value card (3) is inserted a second support (7) and a third support (8) have force components (x₂; x₃) which are operative on the value card (3) and which extend in parallel displaced relationship but in the opposite direction to said force component (x₁) of the first support (6),
characterised in that
the passage (1) has a recess (20) adjoining a lateral edge of the inserted value card (3) between the second support (7) and the third support (8), and
the recess (20) is such that a foreign body (12) which is inserted into the passage (1) instead of the value card (3) and which can be inserted so far into the passage (1) that the edge of the foreign body (12) no longer bears against the second support (7) is rotatable in the support plane (A) by said force components (x₁; x₃), which act in displaced opposite relationship, of the first support (6) and the third support (8), the foreign body (12) being partially displaceable into the recess (20).

2. Apparatus according to claim 1 characterised by an abutment (8) for the value card (3), which is arranged at the passage (1) and by which the depth of penetration (E) of the value card (3) in the insertion direction (R) into the passage (1) can be limited in such a way that the value card (3) cannot be transported into the catch space (9).

3. Apparatus according to one of the preceding claims characterised in that the catch space (9) is of such a configuration and so arranged at the passage (1) that a foreign body (12) which is introduced into the passage (1) through the opening (2) and which does not automatically drop into the catch space (9) can be transported into the catch space (9) by the value card (3) which is pushed in after the foreign body (12) in the passage (1).

4. Apparatus according to one of the preceding claims characterised by a deflection means (11) by which the foreign body (12) can be deflected out of the passage (1) into the catch space (9).

5. Apparatus according to claim 2 characterised in that the abutment together with the first support (8) is embodied in the form of a lever (4) which is rotatable in a certain range in a plane and which when the value card (3) is received can be displaced out of a rest position against a force (F) by the value card (3) laterally away from the value card (3) to such an extent that the value card (3) is positioned for the reading operation when the lever (4) is at maximum displacement and that the deflection means (11) is embodied by a deflection surface (11) on the lever (4).

6. Apparatus according to one of the preceding claims characterised by a transitional location (10) of the passage (1) into the catch space (9). from which the width (B) of the passage (1) is increased in the insertion direction (R) towards the catch space (9).

7. Apparatus according to claim 6 characterised in that the transitional location (10) is set back from the operative region (8) of the deflection means (11) towards the opening (2).

8. Apparatus according to one of claims 2 to 7 characterised by a further deflection means (21) which is arranged after the abutment (8) in relation to the insertion direction (R) in the passage (1) and by which the inserted foreign body (12) can be guided vertically downwardly into the catch space (9).

9. Apparatus according to one of the preceding claims characterised in that the catch space (9) is of a laterally and/or downwardly at least partially open configuration and is thereby not totally delimited laterally and/or downwardly by the apparatus so that the foreign body (12) which is introduced into the passage (1) is not retained in the apparatus.

10. Apparatus according to one of the preceding claims characterised in that the recess (20) and the third support (8) are embodied by a single component of plastics material.

## Revendications

1. Dispositif pour lire une carte à mémoire (3), comprenant :
- un canal (1) dans lequel la carte à mémoire (3) peut être introduite, et
- un espace récepteur (9) disposé au bord du canal et utilisé pour des corps étrangers (12),
où la carte à mémoire (3) est positionnable dans le canal (1) lors de l'introduction dans un plan d'appui (A), grâce à des supports (6 ; 7 ; 8) contigus au bord (3a) de la carte à mémoire (3),
où un premier support (6) présente, lorsque la carte à mémoire (3) est introduite, un composant de force (x1) agissant sur la carte à mémoire (3), lequel composant de force se déplace perpendiculairement à la direction d'introduction (R) par rapport à la carte à mémoire (3), et
où un deuxième support (7) et un troisième support (8), lorsque la carte à mémoire (3) est introduite, présentent des composants de force (x2 ; x3) agissant sur la carte à mémoire (3), lesquels composants de force se déplacent de façon parallèle mais dans une direction opposée à celle dudit composant de force (x1) du premier support (6),
caractérisé
- en ce que le canal (1) présente une indentation (20) contiguë à un bord latéral de la carte à mémoire (3) introduite, entre le deuxième support (7) et le troisième support (8),
- en ce que l'indentation (20) est constituée de façon telle qu'un corps étranger (12) introduit dans le canal (1) à la place de la carte à mémoire (3), lequel corps étranger peut être introduit dans le canal (1) de façon si profonde que le bord du corps étranger (12) n'est plus en appui sur le deuxième support (7) et qu'il est tourné dans le plan d'appui (A), par l'action desdits composants de force (x1 ; x3) du premier support (6) et du troisième support (8) déplacés de façon opposée l'un par rapport à l'autre, où le corps étranger (12) peut être déplacé partiellement dans l'indentation (20).

2. Dispositif selon la revendication 1, caractérisé par une butée (8) disposée au bord du canal (1) et servant pour la carte à mémoire (3), butée grâce à laquelle la profondeur de pénétration (E) de la carte à mémoire (3) peut être limitée dans la direction d'introduction (R) dans le canal (1), de façon telle que la carte à mémoire (3) n'est pas transportable dans l'espace récepteur (9).

3. Dispositif selon l'une ou l'autre des revendications précédentes, caractérisé en ce que l'espace récepteur (9) est configuré et disposé au bord du canal (1) de façon telle, qu'un corps étranger (12), introduit dans le canal (1) par l'ouverture (2), ne tombe pas automatiquement dans l'espace récepteur (9) mais qu'il est transportable dans l'espace récepteur (9) par la carte à mémoire (3) introduite dans le canal (1) après le corps étranger (12).

4. Dispositif selon l'une quelconque des revendications précédentes, caractérisé par un moyen de déviation (11) à l'aide duquel le corps étranger (12) peut être guidé dans l'espace récepteur (9) à partir du canal (1).

5. Dispositif selon la revendication 2, caractérisé en ce que la butée, associée au premier support (8), est réalisée comme un levier (4) pivotant dans un plan suivant une certaine amplitude, lequel levier, lors de la réception de la carte à mémoire (3) s'opposant à une force (F) exercée par la carte à mémoire (3), peut être dévié latéralement par la carte à mémoire (3), en étant éloigné de sa position de repos de façon telle, que la carte à mémoire (3) est positionnée pour la lecture lorsque le levier (4) est dévié au maximum, et en ce que le moyen de déviation (11) est réalisé par une surface de déviation (11) formée au niveau du levier (4).

6. Dispositif selon l'une quelconque des revendications précédentes, caractérisé par un point de passage (10) du canal (1) dans l'espace récepteur (9), point de passage à partir duquel la largeur (B) du canal (1) s'agrandit dans la direction d'introduction (R) vers l'espace récepteur (9).

7. Dispositif selon la revendication 6, caractérisé en ce que le point de passage (10) est décalé en retrait de la zone d'action (8) du moyen de déviation (11), par rapport à l'ouverture (2).

8. Dispositif selon l'une quelconque des revendications 2 à 7, caractérisé par un autre moyen de déviation (21) disposé en aval de la butée (8) par rapport à la direction d'introduction (R) dans le canal (1), moyen de déviation grâce auquel le corps étranger (12) introduit peut être guidé verticalement vers le bas dans l'espace récepteur (9).

9. Dispositif selon l'une quelconque des revendications précédentes, caractérisé en ce que l'espace récepteur (9) est configuré en étant au moins partiellement ouvert latéralement et/ou vers le bas et que, de ce fait, il n'est pas complètement limité par le dispositif, latéralement et/ou vers le bas, de sorte que le corps étranger (12) introduit dans le canal (1) n'est pas retenu dans le dispositif.

10. Dispositif selon l'une quelconque des revendications précédentes, caractérisé en ce que l'indentation (20) et le troisième support (8) sont réalisés par un seul élément en matière plastique.
